# EUROPEAN PATENT SPECIFICATION

(11) **EP 2 573 476 B1**
(45) Date of publication and mention of the grant of the patent: **24.04.2019**
(21) Application number: 12179997.7
(22) Date of filing: 10.08.2012
(51) Int. Cl.: F24F 11/00, F24F 1/06

(54) **Air conditioning apparatus**
Klimaanlage
Appareil de climatisation

(30) Priority: 30.08.2011 JP 2011186728
(43) Date of publication of application: 27.03.2013
(73) Proprietor: Hitachi-Johnson Controls Air Conditioning, Inc., Tokyo 105-0022 (JP)
(72) Inventor: Kageyama, Yuma, Shizuoka, 424-0926 (JP); Hata, Yoshiki, Shizuoka, 424-0926 (JP); Kozai, Tetsuya, Shizuoka, 424-0926 (JP); Yamada, Noriyoshi, Shizuoka, 424-0926 (JP)
(74) Representative: Beetz & Partner mbB

(56) References cited:
- JP-A- 2002 277 023
- JP-A- 2003 148 769
- US-A1- 2003 029 925

## Description

### BACKGROUND OF THE INVENTION

### 1. Field of the Invention

The present invention relates to an air conditioning apparatus.

### 2. Description of the Related Art

JP-2003-148769-A is known as related to the present invention. This application describes something to the following effect: "an outdoor unit of an air conditioner is provided that can maintain a stable air-conditioning operation even when the outdoor unit is placed under an environment in which pressure on an air outlet side is higher than atmospheric pressure. An auxiliary fan (a booster fan) 6 having air blowing performance equivalent to a blown air flow rate of an outdoor fan 4 or more is disposed downstream in a discharging direction of exhaust from an outdoor unit 1. The exhaust from the outdoor unit 1 is thereby further released to outside through the auxiliary fan 6. This achieves a blown air flow rate corresponding to operation of the outdoor fan 4 without having to provide special specifications for the outdoor unit 1. An overall manufacturing cost can therefore be further reduced and a stable operating condition can be maintained without allowing exhaust short circuit or system fault to occur." (See the Abstract.)

### SUMMARY OF THE INVENTION

JP-2003-148769-A discloses an arrangement in which, in order to maintain a stable air-conditioning operation, the auxiliary fan (booster fan) 6 having air blowing performance equivalent to the blown air flow rate of the outdoor fan 4 or more is disposed downstream in a discharging direction of exhaust from the outdoor unit 1. JP-2003-148769-A, however, simply demonstrates that high air blowing performance can be satisfied and fails to disclose any arrangement for operating the auxiliary fan while achieving energy saving. Such an auxiliary fan very often offers a fixed speed. Operating the auxiliary fan, for example, at a constant speed whenever a blower fan of the outdoor unit is operated, however, poses a problem about requirement of a large amount of electric power, although the required air blowing performance can be satisfied.

It is therefore an object of the present invention to provide an air conditioning apparatus that includes an auxiliary fan unit disposed downstream in a discharging direction of exhaust from an outdoor unit and that can satisfy required air blowing performance while achieving energy saving.

To solve the foregoing problem, arrangements as defined in the appended claims are employed. The application includes a plurality of means for solving the foregoing problem. The present invention provides an air conditioning apparatus, comprising: an outdoor unit containing therein an outdoor heat exchanger and an outdoor fan; and an auxiliary fan unit disposed downstream in a discharging direction of exhaust from the outdoor unit during operation of the outdoor fan, the exhaust from the outdoor unit being fed to the auxiliary fan unit. In this air conditioning apparatus, the auxiliary fan unit includes: an auxiliary fan for releasing the exhaust from the outdoor unit to an outside; and first variable speed drive means for driving the auxiliary fan at variable speeds. The outdoor unit includes: second variable speed drive means for driving the outdoor fan at variable speeds; and a control section for issuing a speed command for the outdoor fan to the second variable speed drive means. The control section issues a speed command for the auxiliary fan to the first variable speed drive means to thereby control such that the auxiliary fan and the outdoor fan increase or decrease speeds thereof at an identical speed ratio such that the auxiliary fan does not produce an air flow rate higher than that of the outdoor fan if one indoor unit for one room is operated or under light load conditions.

The present invention can provide an air conditioning apparatus that includes an auxiliary fan unit disposed downstream in a discharging direction of exhaust from an outdoor unit and that can satisfy required air blowing performance while achieving energy saving.

Problems, arrangements, and effects other than those described above will be apparent from the following more particular description of embodiments of the present invention.

### BRIEF DESCRIPTION OF THE DRAWINGS

Other objects and advantages of the invention will become apparent from the following description of embodiments with reference to the accompanying drawings in which:
Fig. 1 is a diagram illustrating a structure of an air conditioning apparatus according to an embodiment of the present invention;
Fig. 2 is a timing chart that is operatively associated with a speed of an auxiliary fan;
Fig. 3 is an illustration showing an arrangement of an auxiliary fan unit;
Fig. 4 is an illustration showing an arrangement of an embodiment in which a plurality of auxiliary fan units is connected together; and
Fig. 5 is an illustration showing an arrangement of an embodiment in which an auxiliary fan unit is used as is for a blower of an outdoor unit, the auxiliary fan unit being connected to a plurality of auxiliary fan units.

### DESCRIPTION OF THE PREFERRED EMBODIMENTS

Embodiments of the present invention will be described below with reference to the accompanying drawings.

### First embodiment

In general, an outdoor unit of an air conditioning apparatus is installed at a site at which an exhaust side of the outdoor unit is open, such as on a roof or a balcony of a building. From the standpoint of appearance of the building or a landscape, however, late outdoor units are often installed at out-of-sight places, such as inside a ceiling of a building or an underground parking lot, or at sites surrounded by a gallery. Some local authorities impose legal restrictions on the landscape. In such cases, means is often incorporated for feeding exhaust of the outdoor unit up to an outlet side of a duct that is connected to the exhaust side of the outdoor unit. Standard outdoor units, however, may not be able to achieve external static pressure that causes the exhaust of the outdoor unit to reach the duct outlet side depending on length or pressure loss of the duct, or air blowing performance of the outdoor unit concerned. In such cases, a required air flow rate cannot be achieved, which poses a problem about reduced cooling capacity and heating capacity.

To prevent this reduction in capacity, an auxiliary fan unit that may be called a booster fan and that performs an auxiliary function is often additionally installed on the duct at the local site. The auxiliary fan unit typically includes an auxiliary fan and a fan motor. Simply structured, many auxiliary fan units have a fixed fan speed.

For a multi-system outdoor unit in which a single outdoor unit (or a plurality of outdoor units) circulates a refrigerant through a plurality of indoor units to thereby operate the indoor units for cooling or heating, a refrigerant flow rate changes considerably according as the number of operating indoor units changes from one to two or more, or as ambient temperatures of the indoor unit and the outdoor unit change. The variations in the refrigerant flow rate are therefore addressed by performing control such that the speed of an outdoor unit fan is varied by an inverter, so that necessary refrigerating cycle capacity can be maintained to achieve a desired operation.

The speed of the outdoor unit fan undergoes considerable variations according to, for example, the variations in the refrigerant flow rate as described above. In this case, when the auxiliary fan is operated at a constant speed at all times in time with an operation of the outdoor unit fan, and if one indoor unit for one room is operated or under light load conditions, the auxiliary fan unit produces an air flow rate higher than that of the outdoor unit. This creates suction from the auxiliary fan unit relative to the outdoor unit. Then, air is drawn and the outdoor unit is operated at an air flow rate higher than it requires, which may adversely affect a cycle condition. Possible solutions to the foregoing problem include a damper or a pressure sensor additionally installed; the damper is then used to adjust an opening angle to thereby change a passage area inside the duct, so that the air flow rate of the auxiliary fan unit can be adjusted. For example, under a condition in which the auxiliary fan unit requires a low air flow rate, the damper is closed to narrow the passage area of the duct. Resistance in the duct is thereby increased to forcedly reduce the air flow rate.

Adjusting the damper or the pressure at the local site or building a control system therefor requires a tremendous amount of labor and increases the number of component parts, resulting in an increased cost. Operating the auxiliary fan at the constant speed consumes a considerable amount of electric power, which hampers energy saving efforts. An air conditioning apparatus according to the embodiment for solving the foregoing problems will be described below.

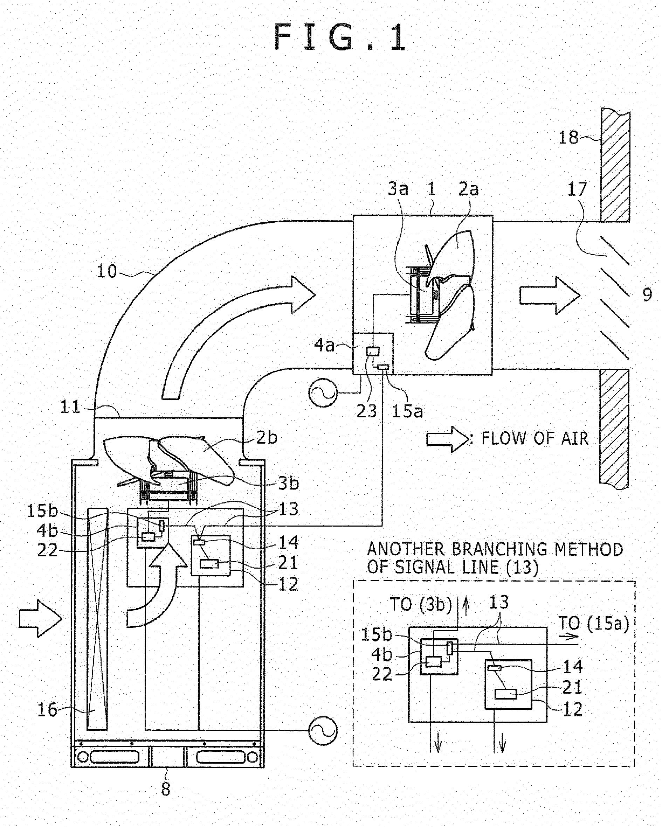

Fig. 1 is a diagram illustrating the air conditioning apparatus according to the embodiment of the present invention. An auxiliary fan unit 1 is disposed in a duct 10 that connects an outdoor unit 8 and a duct outlet side 9 so as to achieve external static pressure. A louver 17 is disposed at an outlet of the duct 10. The duct 10 has the outlet connected to a wall 18. The outdoor unit 8 includes a heat exchanger 16, an outdoor fan 2b, and a fan motor 3b. Specifically, the outdoor fan 2b blows air against the heat exchanger 16. The fan motor 3b drives the outdoor fan 2b. The air conditioning apparatus further includes other refrigerating cycle parts, such as a compressor not shown.

A flow of air through the outdoor unit 8 and the auxiliary fan unit 1 will be described below. Energizing the fan motor 3b of the outdoor unit 8 rotates the outdoor fan 2b, which draws air into an inside of the outdoor unit 8. The drawn air undergoes heat exchange as it flows past the heat exchanger 16 and is then discharged through an outlet 11. In this case, an auxiliary fan motor 3a of the auxiliary fan unit 1 is energized to thereby rotate an auxiliary fan 2a. This causes the air discharged from the outlet 11 to be drawn in and discharged to the duct outlet side 9 through the duct 10.

A control section 21 that controls the outdoor unit 8 is mounted on a control board 12. The control section 21 issues a control command to the outdoor fan 2b. Variable speed drive means (inverter) 22 that drives the fan motor 3b is mounted on a fan motor drive board 4b. A speed command signal for the outdoor fan 2b (fan motor 3b) is transmitted from the control section 21 of the control board 12 to the fan motor drive board 4b. On the fan motor drive board 4b that receives the speed command signal, the variable speed drive means (inverter) 22 causes current to flow therefrom to the fan motor 3b based on the speed command signal received to achieve a desired variable speed.

The auxiliary fan unit 1 will be described below. The auxiliary fan unit 1 includes the auxiliary fan 2a and the auxiliary fan motor 3a that drives the auxiliary fan 2a. In the auxiliary fan unit 1 of this embodiment, variable speed drive means (inverter) 23 that drives the auxiliary fan motor 3a at variable speeds is mounted on an auxiliary fan motor drive board 4a. The auxiliary fan motor 3a and the auxiliary fan 2a are to be rotated at variable speeds by a command from the variable speed drive means (inverter) 23. Additionally, in this embodiment, speed commands for the auxiliary fan motor 3a and the auxiliary fan 2a are issued from the control section 21 of the outdoor unit 8. Specifically, the control section 21 is adapted to not only transmit a speed command signal to the outdoor fan 2b (fan motor 3b), but also issue a speed command for the auxiliary fan motor 3a and the auxiliary fan 2a. This simplifies a structure of the auxiliary fan motor drive board 4a, thus achieving cost reduction.

It is noted that the speed command signal from the control section 21 to the outdoor fan 2b (fan motor 3b) is transmitted from a port 14 of the control board 12 to a port 15b of the fan motor drive board 4b via a signal line 13. Similarly, the speed command signal from the control section 21 to the auxiliary fan 2a (auxiliary fan motor 3a) is transmitted from the port 14 to a port 15a of the auxiliary fan motor drive board 4a via the signal line 13. In this case, the auxiliary fan motor drive board 4a and the fan motor drive board 4b may be configured as a single board, which can achieve considerable cost reduction compared with a case at which separate boards are made.

Specific details of a method for controlling the outdoor fan 2b and the auxiliary fan 2a will be described below. It is here noted that, in this embodiment, the control signal for the speed of the outdoor fan 2b is transmitted to each of the auxiliary fan motor drive board 4a and the fan motor drive board 4b from the port 14 of the control board 12 via the signal line 13. This is, however, not the only possible method for transmitting the signal. For example, as shown inside the broken line of Fig. 1, the control signal for the speed of the outdoor fan 2b (speed command signal) may be transmitted to the auxiliary fan motor drive board 4a from the port 15b of the fan motor drive board 4b via the signal line 13. Additionally, the auxiliary fan motor drive board 4a and the fan motor drive board 4b are external relative to respective fan motors. Each of the auxiliary fan motor drive board 4a and the fan motor drive board 4b may nonetheless be built into the corresponding fan motor.

It is here noted that, for a multi-system outdoor unit in which a single outdoor unit (or a plurality of outdoor units) circulates a refrigerant through a plurality of indoor units to thereby operate the indoor units for cooling or heating, a refrigerant flow rate changes considerably according as the number of operating indoor units changes from one to two or more, or as ambient temperatures of the indoor unit and the outdoor unit change. For example, when only one indoor unit is operated for single-room operation, the refrigerant flow rate is low and the speed of the outdoor fan 2b of the outdoor unit 8 is controlled to be low as compared with all-room operation. When load inside and outside the room is low, for example, when an outside temperature is low and an interior temperature is low during cooling operation, the refrigerant flow rate becomes low and the fan speed of the outdoor unit 8 is controlled to be lower than that under heavy load. If the speed of the auxiliary fan 2a of the auxiliary fan unit 1 is fixed in such cases, a large amount of electric power is required, which hampers energy saving efforts.

If the speed of the auxiliary fan 2a of the auxiliary fan unit 1 is fixed in such cases, and when one indoor unit for one room is operated or under light load conditions, the auxiliary fan unit 1 produces an air flow rate higher than that of the outdoor unit. This creates suction from the auxiliary fan unit 1 relative to the outdoor unit 8. Then, air is drawn and the outdoor unit 8 is operated at an air flow rate higher than it requires, which may at times adversely affect a refrigerating cycle condition.

The air conditioning apparatus (or may be referred to as an air conditioning system) of this embodiment thus includes the outdoor unit 8 that contains therein the outdoor heat exchanger 16 and the outdoor fan 2b and the auxiliary fan unit 1 disposed downstream in a discharging direction of exhaust from the outdoor unit 8 when the outdoor fan 2b is operated. The exhaust from the outdoor unit 8 is to be fed to the auxiliary fan unit 1 through the duct 10. The auxiliary fan unit 1 includes the auxiliary fan 2a that releases the exhaust from the outdoor unit 8 to the outside and first variable speed drive means 23 that drives the auxiliary fan 2a at variable speeds. The outdoor unit 8, on the other hand, includes second variable speed drive means 22 that drives the outdoor fan 2b at variable speeds and the control section 21 that gives the second variable speed drive means 22 a speed command for the outdoor fan 2b. The control section 21 gives the first variable speed drive means 23 a speed command for the auxiliary fan 2a, thereby controlling such that the speeds of the auxiliary fan 2a and the outdoor fan 2b increase or decrease at an identical speed ratio.

By producing such an air flow rate as to achieve the external static pressure through the foregoing arrangements, the speed can be reduced when the auxiliary fan does not require a high air flow rate. This makes small the electric power as compared with rotation at the constant speed at all times, thus achieving energy saving. The arrangements further eliminate a situation in which the auxiliary fan unit produces an air flow rate higher than that of the outdoor unit, if one indoor unit for one room is operated or under light load conditions. The refrigerating cycle condition can thus be prevented from being adversely affected as described above. In addition, the control section 21 of the outdoor unit 8 is adapted to issue the speed command to not only the outdoor fan 2b, but also the auxiliary fan 2a. This eliminates the need for setting an independent control section for the auxiliary fan 2a, so that the auxiliary fan unit 1 can be configured simply.

Preferably, the control section 21 controls such that the auxiliary fan 2a and the outdoor fan 2b are rotated at the same speed. Further preferably, the auxiliary fan 2a and the outdoor fan 2b each have a substantially identical diameter. This allows the same part to be used for the auxiliary fan 2a and the outdoor fan 2b, which enables reduction in a manufacturing cost. If the auxiliary fan 2a has a diameter different from that of the outdoor fan 2b, the control section 21 controls such that, of the auxiliary fan 2a and the outdoor fan 2b, whichever has a larger diameter rotates at a lower speed.

The control section 21 transmits the same speed command signal to the first variable speed drive means 23 and the second variable speed drive means 22. This eliminates the need for having an independent control section for the auxiliary fan unit 1, so that both fans can be controlled so as to meet required air flow rate performance with a simple arrangement. In addition, the control board 4a mounted with the first variable speed drive means 23 and the control board 4b mounted with the second variable speed drive means 22 are formed from an identical board. The control boards are mounted with the receiving sections (15b, 15a) for receiving the speed command signals from the control section 21. This allows the same board to be used for two different types of board, achieving reduction in the manufacturing cost.

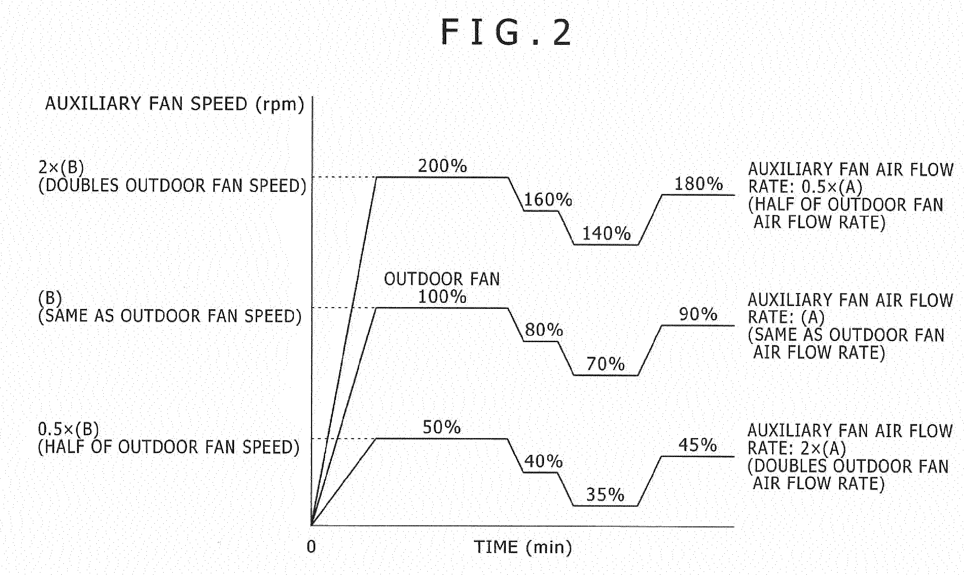

Fig. 2 shows graphs for illustrating the speed of the auxiliary fan 2a when the auxiliary fan 2a and the outdoor fan 2b have the same air flow rate.

The upper graph of Fig. 2 shows the auxiliary fan speed when a small auxiliary fan is used that delivers half (0.5 x A) of an outdoor fan air flow rate (A) at the same speed. In this case, to have the same air flow rate, the auxiliary fan speed should double (2 x B) an outdoor fan speed (B).

The middle graph of Fig. 2 shows the auxiliary fan speed when an auxiliary fan is used that delivers the same air flow rate (A) as the outdoor fan air flow rate (A) at the same speed (specifically, the same fan is used as the outdoor fan). In this case, to cause the outdoor fan and the auxiliary fan to deliver the same air flow rate (A), the auxiliary fan is rotated at the same speed (B) as the outdoor fan that is half the speed of the upper graph of Fig. 2. The outdoor fan speed (B) is varied in a stepwise fashion (100%, 90%, 80%, 70%, ..) as the outdoor fan air flow rate changes.

The lower graph of Fig. 2 shows, in contrast to the upper graph of Fig. 2, the auxiliary fan speed when a large auxiliary fan is used that delivers twice (2 x A) as high as the outdoor fan air flow rate (A) at the same speed. In this case, to cause the outdoor fan and the auxiliary fan to deliver the same air flow rate (A), the auxiliary fan speed should be half (0.5 x B)of the outdoor fan speed (B).

In order to adjust the speed of the auxiliary fan 2a, this embodiment has a function of correcting the control signal for the fan speed of the auxiliary fan unit 1 according to an air flow rate characteristic of the auxiliary fan 2a. For example, the control signal for the fan speed of the auxiliary fan unit 1 may be subjected to multiplier conversion by changing the position of a switch on the auxiliary fan motor drive board 4a according to the air flow rate characteristic of the auxiliary fan 2a. This allows the outdoor unit 8 and the auxiliary fan unit 1 to be operatively associated with each other to deliver the same air flow rate even when the outdoor fan 2b has an air flow rate characteristic different from that of the auxiliary fan 2a.

### Second embodiment

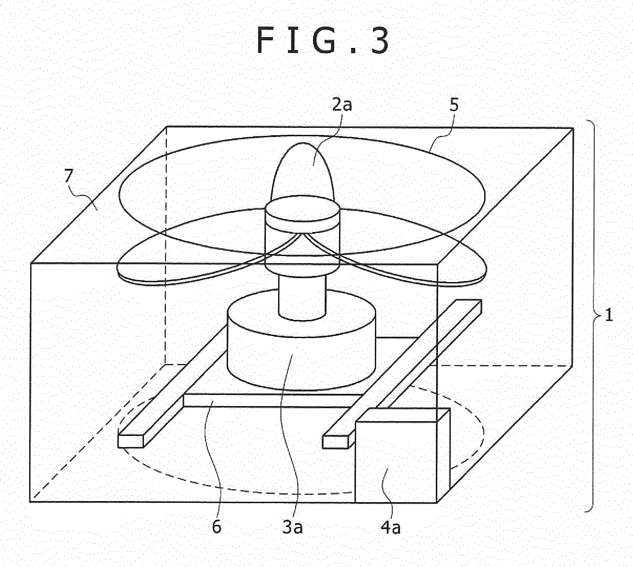

An air conditioning apparatus according to a second embodiment will be described below with reference to Fig. 3.

Fig. 3 illustrates a structure of an auxiliary fan unit 1 according to this embodiment. The auxiliary fan unit 1 includes an auxiliary fan 2a, an auxiliary fan motor 3a, and an auxiliary fan motor drive board 4a for receiving a control signal from a control board 12 of an outdoor unit 8, all built therein. The auxiliary fan 2a, the auxiliary fan motor 3a, and the auxiliary fan motor drive board 4a are formed from corresponding parts in the outdoor unit 8. This permits use of common parts carried over from an air blowing system of the outdoor unit 8. A shroud 5 and a motor clamp 6 of the auxiliary fan unit 1 may therefore be formed from corresponding parts in the outdoor unit 8. The common use of parts permits cost reduction and shortening of a development period.

Furthermore, the shroud 5 and the motor clamp 6 are surrounded by an auxiliary fan unit outer frame 7. The auxiliary fan unit outer frame 7 has mechanisms disposed at upper and lower portions thereof. The mechanisms can be connected to a duct 10. The connecting mechanism, though not shown, may have a common screw fastening or other connecting mechanism. Additionally, the auxiliary fan unit of this embodiment may be incorporated in the air conditioning apparatus of other embodiments.

### Third embodiment

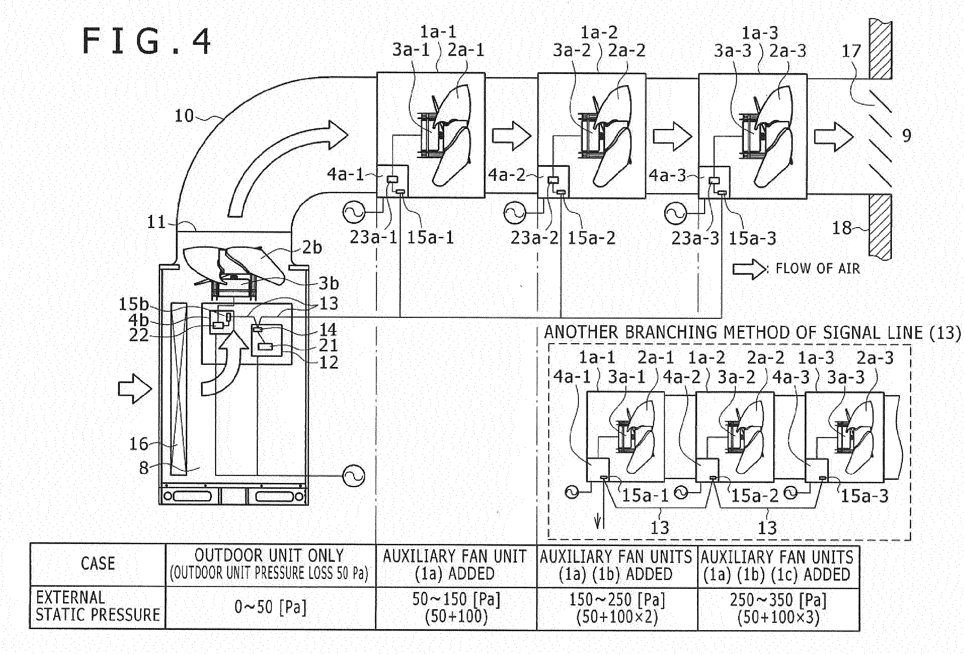

An air conditioning apparatus according to a third embodiment will be described below with reference to Fig. 4.

An auxiliary fan unit 1 of this embodiment has the same arrangement as that described with reference to the second embodiment. The auxiliary fan unit 1 is formed into a single module and multiple auxiliary fan units 1a-1, 1a-2, 1a-3 are connected together in the middle of a duct 10 using connecting mechanisms of an outer frame 7. Fig. 4 shows three auxiliary fan units connected together. Any number of auxiliary fan units may nonetheless be connected together, as determined depending air flow rate requirements.

All of these auxiliary fan units 1a-1, 1a-2, 1a-3 include auxiliary fan motor drive boards 4a-1, 4a-2, 4a-3, respectively, that are identical to that of the outdoor unit 8. As with the control system described for the first embodiment, speed command signals for speeds of auxiliary fans 2a-1, 2a-2, 2a-3 transmitted from a control section 21 of a control board 12 of the outdoor unit 8 are transmitted to the auxiliary fan units 1a-1, 1a-2, 1a-3, respectively, via a signal line 13 from a port 18 of the control board 12. The speed command signals are received by auxiliary fan motor drive boards 4a-1, 4a-2, 4a-3. Variable speed drive means 23a-1, 23a-2, 23a-3 mounted on respective boards then cause variable current to flow through respective auxiliary fan motors 3a-1, 3a-2, 3a-3 to achieve desired speeds based on these speed command signals.

The embodiment exemplifies that the speed command signals for the speeds of the auxiliary fan motors are transmitted from the port 14 of the control board 12 via the signal line 13 to the auxiliary fan motor drive boards 4a-1, 4a-2, 4a-3. This is, however, not the only possible branching method of the signal line. As with the first embodiment, the control signal of the fan speed may be branched to the auxiliary fan motor drive boards 4a-1, 4a-2, 4a-3 from a port 15b of a fan motor drive board 4b via the signal line 13.

Alternatively, referring to another branching method shown inside a broken line frame in Fig. 4, the control signal for the fan speed may be branched from a port 15a-1 of the auxiliary fan motor drive board 4a-1 to other auxiliary fan motor drive boards 4a-2, 4a-3 via the signal line 13. In this case, the length of the signal line 13 wired from the auxiliary fan motor drive board 4a to transmit the control signal for the fan speed is short and the arrangement is less susceptible to external noise (disturbance). An erratic operation caused by the external noise can therefore be prevented. Additionally, the drive boards of fan motors (4a-1, 4a-2, 4a-3, 4b) are exemplified as being external relative to the fan motors. Nonetheless, the drive boards may be built into the fan motors.

Fan control for each of the above cases will be described below. The system includes, in addition to the auxiliary fan unit 1a-1, the downstream auxiliary fan units (1a-2, 1a-3) disposed downstream in a discharging direction of exhaust from the auxiliary fan unit 1a-1 when an outdoor fan 2b is operated. The exhaust from the outdoor unit 8 is fed via a duct 10 to the auxiliary fan unit 1a-1 and further to the downstream auxiliary fan units 1a-2, 1a-3. The downstream auxiliary fan units (1a-2, 1a-3) further include: downstream auxiliary fans (2a-2, 2a-3) for releasing the exhaust from the auxiliary fan unit 1a-1 to the outside; and third variable speed drive means (23a-2, 23a-3) that drive the downstream auxiliary fans (2a-2, 2a-3) at variable speeds. The control section 21 gives the third variable speed drive means (23a-2, 23a-3) speed commands for the downstream auxiliary fans (2a-2, 2a-3), thereby controlling such that the auxiliary fan 2a-1 and the downstream auxiliary fans (2a-2, 2a-3) increase or decrease their speeds at the same speed ratio.

By producing such an air flow rate as to achieve the external static pressure through the foregoing arrangements, the speed can be reduced when each of the auxiliary fans (2a-1, 2a-2, 2a-3) does not require a high air flow rate. This makes small the electric power as compared with rotation at the constant speed at all times, thus achieving energy saving. The arrangements further eliminate a situation in which the auxiliary fan unit (1a-1, 1a-2, 1a-3) produces an air flow rate higher than that of the outdoor unit, if one indoor unit for one room is operated or under light load conditions. The refrigerating cycle condition can thus be prevented from being adversely affected as described with reference to the first embodiment. In addition, the control section 21 of the outdoor unit 8 is adapted to issue the speed command to not only the outdoor fan 2b, but also the auxiliary fans (2a-1, 2a-2, 2a-3). This eliminates the need for setting an independent control section for the auxiliary fans (2a-1, 2a-2, 2a-3), so that the auxiliary fan units (1a-1, 1a-2, 1a-3) can be configured simply.

Additionally, preferably, the auxiliary fan 2a-1 and the downstream auxiliary fans (2a-2, 2a-3) have a substantially identical diameter and the control section 21 controls such that the auxiliary fan 2a-1 and the downstream auxiliary fans (2a-2, 2a-3) rotate at the same speed.

Let (Y) Pa be the external static pressure achieved by a single unit (one module) of the auxiliary fan unit 1a-1. Then, a two-unit (two-module) configuration of the auxiliary fan units (1a-1, 1a-2) can achieve an external static pressure of (2 x Y) Pa, a three-unit (three-module) configuration of the auxiliary fan units (1a-1, 1a-2, 1a-3) can achieve an external static pressure of (3 x Y) Pa, and an n-unit (n-module) configuration can achieve an external static pressure of (n x Y) Pa.

Assume, for example, that the external static pressure of the auxiliary fan units (1a-1, 1a-2, 1a-3) is 100 Pa when the external static pressure of a single outdoor unit 8 is 50 Pa and pressure loss is 50 Pa. Then, the single-unit configuration of the auxiliary fan unit 1a-1 can achieve an external static pressure of up to 50 to 150 Pa, the two-unit configuration of the auxiliary fan units 1a-1, 1a-2 can achieve an external static pressure of up to 150 to 250 Pa, and the three-unit configuration of the auxiliary fan units (1a-1, 1a-2, 1a-3) can achieve an external static pressure of up to 250 to 350 Pa. This allows the number of auxiliary fan units (1) to be freely increased depending on a wide range of external static pressures, so that the embodiment can be applied to, for example, a long duct having a high static pressure.

### Fourth embodiment

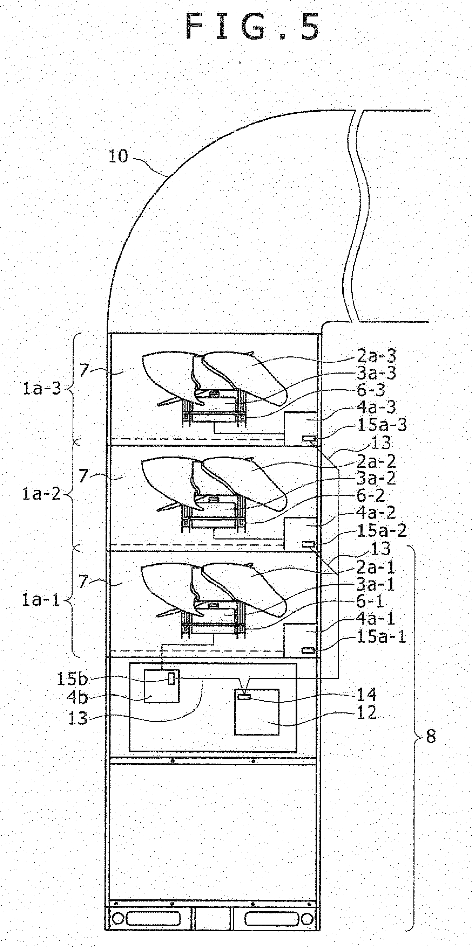

A fourth embodiment of the present invention will be described below with reference to Fig. 5.

Fig. 5 illustrates an arrangement of an air conditioning apparatus according to the fourth embodiment. An auxiliary fan unit 1a-1 is used as is for a blower of an outdoor unit 8. In this case, the auxiliary fan unit 1a-1 built into the outdoor unit 8 has a connecting mechanism on an outer frame thereof so as to be directly connected to other auxiliary fan units 1a-2, 1a-3 without having a duct 10 interposed therebetween. As with the third embodiment, multiple auxiliary fan units may be connected together according to external static pressure requirements, so that the embodiment can be applied to, for example, a high external static pressure requirement involving a long duct. Other like or corresponding parts are identified by the same reference numerals as those used for the third embodiment and the control method is the same as that in the third embodiment, so that descriptions for those will not be hereunder duplicated. It is noted that, although Fig. 5 does not show variable speed drive means (23a-1, 23a-2, 23a-3) on auxiliary fan motor drive boards (4a-1, 4a-2, 4a-3) of the auxiliary fan units (1a-1, 1a-2, 1a-3), the auxiliary fan motor drive boards (4a-1, 4a-2, 4a-3) are mounted with the variable speed drive means (23a-1, 23a-2, 23a-3) as in Fig. 4. Although Fig. 5 also omits a control section 21 on a control board 12, the control board 12 is mounted with the control section 21.

If capacity of the outdoor unit 8 may be reduced due to, for example, high temperature ambient conditions, and construction conditions including increased connection capacity of indoor units and long piping, the auxiliary fan unit 1a-1 is used as is for the blower of the outdoor unit 8, built into the outdoor unit 8, and is then directly connected to the auxiliary fan unit 1a-2 for multiple connection of multiple auxiliary fan units (1a-1, 1a-2, 1a-3). This achieves the same effect as in the third embodiment, so that air blowing performance of the outdoor unit can be improved and reduction in capacity can be prevented.

A signal line 13 that transmits a control signal for the fan speed from the control board 12 is short, so that the arrangement is less susceptible to external noise (disturbance). An erratic operation caused by the external noise, for example, can therefore be prevented.

The above embodiments of the invention as well as the appended claims and figures show multiple characterizing features of the invention in specific combinations. The skilled person will easily be able to consider further combinations or sub-combinations of these features in order to adapt the invention as defined in the claims to his specific needs.

## Claims

1. An air conditioning apparatus, comprising:
an outdoor unit (8) containing therein an outdoor heat exchanger (16) and an outdoor fan (2b); and
an auxiliary fan unit (1) disposed downstream in a discharging direction of exhaust from the outdoor unit (8) during operation of the outdoor fan (2b), the exhaust from the outdoor unit (8) being fed to the auxiliary fan unit (1), wherein
the auxiliary fan unit (1) includes:
an auxiliary fan (2a) for releasing the exhaust from the outdoor unit (8) to an outside; and
first variable speed drive means (23) for driving the auxiliary fan (2a) at variable speeds;
the outdoor unit (8) includes:
second variable speed drive means (22) for driving the outdoor fan(2b) at variable speeds; and
a control section for issuing a speed command for the outdoor fan (2b) to the second variable speed drive means (22),
**characterized in that** the control section is configured to issue a speed command for the auxiliary fan (2a) to the first variable speed drive means (23)to thereby control such that the auxiliary fan (2a) and the outdoor fan (2b) increase or decrease speeds thereof at an identical speed ratio and such that the auxiliary fan (2a) does not produce an air flow rate higher than that of the outdoor fan (2b) if one indoor unit for one room is operated or under light load conditions.

2. The air conditioning apparatus according to claim 1, wherein
the exhaust from the outdoor unit (8) is fed to the auxiliary fan (2a) by way of a duct member.

3. The air conditioning apparatus according to claim 1, wherein
the control section controls such that the auxiliary fan (2a) and the outdoor fan (2b) rotate at an identical speed.

4. The air conditioning apparatus according to claim 2, wherein
the auxiliary fan (2a) and the outdoor fan (2b) have a substantially identical diameter.

5. The air conditioning apparatus according to claim 1, wherein
the auxiliary fan (2a) and the outdoor fan (2b) have different diameters from each other; and
the control section controls such that, of the auxiliary fan (2a) and the outdoor fan (2b), whichever has a larger diameter rotates at a lower speed.

6. The air conditioning apparatus according to claim 1, wherein
the control section transmits an identical speed command signal to the first variable speed drive means (23) and the second variable speed drive means (22).

7. The air conditioning apparatus according to claim 1, wherein
a control board (12) mounted with the first variable speed drive means (23) and a control board (12) mounted with the second variable speed drive means (22) are formed from a single, identical board; and
these control boards (12) are mounted with the receiving sections for receiving the speed command signals from the control section.

8. The air conditioning apparatus according to claim 1, further comprising:
in addition to the auxiliary fan unit (1), a downstream auxiliary fan unit (1) disposed downstream in a discharging direction of exhaust from the auxiliary fan unit (1) during operation of the outdoor fan (2b), wherein
the exhaust from the outdoor unit (8) is to be fed to the auxiliary fan unit (1) and further to the downstream auxiliary fan unit (1);
the downstream auxiliary fan unit (1) includes:
a downstream auxiliary fan (2a-2, 2a-3) for releasing the exhaust from the auxiliary fan unit (1) to the outside; and
third variable speed drive means for driving the downstream auxiliary fan (2a-2, 2a-3) at variable speeds; and
the control section issues a speed command for the downstream auxiliary fan (2a-2, 2a-3) to the third variable speed drive means to thereby control such that the auxiliary fan (2a) and the downstream auxiliary fan (2a-2, 2a-3) increase or decrease speeds thereof at an identical speed ratio.

9. The air conditioning apparatus according to claim 8, wherein
the auxiliary fan (2a) and the downstream auxiliary fan (2a-2, 2a-3) have a substantially identical diameter; and
the control section controls such that the auxiliary fan (2a) and the downstream auxiliary fan (2a-2, 2a-3) rotate at an identical speed.

10. The air conditioning apparatus according to claim 8, wherein
the exhaust from the outdoor unit (8) is fed to the auxiliary fan unit (1) and further to the downstream auxiliary fan unit (1) by way of a duct member.

## Patentansprüche

1. Klimatisierungsvorrichtung, umfassend:
eine Außeneinheit (8), die darin einen Außenwärmetauscher (16) und einen Außenlüfter (2b) enthält; und
eine Zusatzlüftereinheit (1), die während des Betriebs des Außenlüfters (2b) nachgeschaltet in Abströmrichtung der Abluft von der Außeneinheit (8) angeordnet ist, wobei die Abluft von der Außeneinheit (8) der Zusatzlüftereinheit (1) zugeführt wird, wobei
die Zusatzlüftereinheit (1) beinhaltet:
einen Zusatzlüfter (2a) zum Ablassen der Abluft von der Außeneinheit (8) nach außen; und
erste Antriebsmittel (23) mit variabler Drehzahl zum Antreiben des Zusatzlüfters (2a) mit variablen Drehzahlen;
die Außeneinheit (8) beinhaltet:
ein zweites Antriebsmittel (22) mit variabler Drehzahl zum Antreiben des Außenlüfters (2b) mit variablen Drehzahlen; und
einen Steuerabschnitt zum Ausgeben eines Drehzahlbefehls für den Außenlüfter (2b) an das zweite Antriebsmittel (22) mit variabler Drehzahl, **dadurch gekennzeichnet, dass** der Steuerabschnitt konfiguriert ist, um einen Drehzahlbefehl für den Zusatzlüfter (2a) an das erste Antriebsmittel (23) mit variabler Drehzahl auszugeben, um dadurch so zu steuern, dass der Zusatzlüfter (2a) und der Außenventilator (2b) deren Drehzahlen bei einem identischen Drehzahlverhältnis erhöhen oder verringern und so, dass der Zusatzlüfter (2a) keinen höheren Luftdurchsatz erzeugt als der des Außenlüfters (2b), wenn eine Inneneinheit für einen Raum betrieben wird oder unter leichten Lastbedingungen.

2. Klimatisierungsvorrichtung nach Anspruch 1, wobei
die Abluft aus der Außeneinheit (8) über ein Kanalelement dem Zusatzlüfter (2a) zugeführt wird.

3. Klimatisierungsvorrichtung nach Anspruch 1, wobei
der Steuerabschnitt so steuert, dass sich der Zusatzlüfter (2a) und der Außenlüfter (2b) mit gleicher Drehzahl drehen.

4. Klimatisierungsvorrichtung nach Anspruch 2, wobei
der Zusatzlüfter (2a) und der Außenlüfter (2b) einen im Wesentlichen identischen Durchmesser aufweisen.

5. Klimatisierungsvorrichtung nach Anspruch 1, wobei
der Zusatzlüfter (2a) und der Außenlüfter (2b) unterschiedliche Durchmesser voneinander aufweisen; und der Steuerabschnitt so steuert, dass sich der Zusatzlüfter (2a) und der Außenlüfter (2b), je nachdem, welcher einen größeren Durchmesser aufweist, mit einer niedrigeren Drehzahl dreht.

6. Klimatisierungsvorrichtung nach Anspruch 1, wobei
der Steuerabschnitt ein identisches Geschwindigkeitsbefehlssignal an das erste Antriebsmittel (23) mit variabler Drehzahl und das zweite Antriebsmittel (22) mit variabler Drehzahl überträgt.

7. Klimatisierungsvorrichtung nach Anspruch 1, wobei
eine Steuerplatine (12), die mit dem ersten Antriebsmittel (23) mit variabler Drehzahl und einer Steuerplatine (12), die mit dem zweiten Antriebsmittel (22) mit variabler Drehzahl montiert ist, aus einer einzigen, identischen Platine gebildet sind; und
diese Steuerplatinen (12) mit den Empfangsabschnitten zum Empfangen der Geschwindigkeitsbefehlssignale von dem Steuerabschnitt montiert sind,

8. Klimatisierungsvorrichtung nach Anspruch 1, ferner umfassend:
zusätzlich zur Zusatzlüftereinheit (1) eine nachgeschaltete Zusatzlüftereinheit (1), die nachgeschaltet in einer Abströmrichtung der Abluft der Zusatzlüftereinheit (1) während des Betriebs des Außenlüfters (2b) angeordnet ist, wobei
die Abluft von der Außeneinheit (8) der Zusatzlüftereinheit (1) und ferner der nachgeschalteten Zusatzlüftereinheit (1) zuzuführen ist;
die nachgeschaltete Zusatzlüftereinheit (1) beinhaltet:
einen nachgeschalteten Zusatzlüfter (2a-2, 2a-3) zum Ablassen der Abluft von der Zusatzlüftereinheit (1) nach außen; und
dritte Antriebsmittel mit variabler Drehzahl zum Antreiben des nachgeschalteten Zusatzlüfters (2a-2, 2a-3) mit variablen Drehzahlen; und
der Steuerabschnitt einen Drehzahlbefehl für den nachgeschalteten Zusatzlüfter (2a-2, 2a-3) an das dritte Antriebsmittel mit variabler Drehzahl abgibt, um dadurch so zu steuern, dass der Zusatzlüfter (2a) und der nachgeschaltete Zusatzlüfter (2a-2, 2a-3) deren Drehzahlen in einem identischen Drehzahlverhältnis erhöhen oder verringern.

9. Klimatisierungsvorrichtung nach Anspruch 8, wobei
der Zusatzlüfter (2a) und der nachgeschaltete Zusatzlüfter (2a-2, 2a-3) einen im Wesentlichen identischen Durchmesser aufweisen; und
der Steuerabschnitt so steuert, dass sich der Zusatzlüfter {2a} und der nachgeschaltete Zusatzlüfter (2a-2, 2a-3) mit einer identischen Drehzahl drehen.

10. Klimatisierungsvorrichtung nach Anspruch 8, wobei
die Abluft von der Außeneinheit (8) über ein Kanalelement der Zusatzlüftereinheit (1) und ferner der nachgeschalteten Zusatzlüftereinheit (1) zugeführt wird.

## Revendications

1. Appareil de conditionnement d'air, comprenant :
une unité extérieure (8) contenant à l'intérieur un échangeur de chaleur extérieur (16) et un ventilateur extérieur (2b) ; et
une unité de ventilateur auxiliaire (1) disposée en aval dans une direction de déchargement d'extraction venant de l'unité extérieure (8) pendant le fonctionnement du ventilateur extérieur (2b), l'extraction venant de l'unité extérieure (8) étant alimentée vers l'unité de ventilateur auxiliaire (1), dans lequel
l'unité de ventilateur auxiliaire (1) inclut :
un ventilateur auxiliaire (2a) pour libérer l'extraction venant de l'unité extérieure (8) vers un extérieur ; et
un premier moyen d'entraînement à vitesse variable (23) pour entraîner le ventilateur auxiliaire (2a) à des vitesses variables ;
l'unité extérieure (8) inclut :
un deuxième moyen d'entraînement à vitesse variable (22) pour entraîner le ventilateur extérieur (2b) à des vitesses variables ; et
une section de commande pour émettre une commande de vitesse pour le ventilateur extérieur (2b) au deuxième moyen d'entraînement à vitesse variable (22),
**caractérisé en ce que** la section de commande est configurée pour émettre une commande de vitesse pour le ventilateur auxiliaire (2a) au premier moyen d'entraînement à vitesse variable (23) pour commander de façon à ce que le ventilateur auxiliaire (2a) et le ventilateur extérieur (2b) augmentent ou réduisent les vitesses de ceux-ci à un rapport de vitesses identique et de telle façon que le ventilateur auxiliaire (2a) ne produise pas de débit d'air supérieur à celui du ventilateur extérieur (2b) si une unité intérieure pour une pièce fonctionne ou dans des conditions de charge légère.

2. Appareil de conditionnement d'air selon la revendication 1, dans lequel
l'extraction venant de l'unité extérieure (8) est alimentée vers le ventilateur auxiliaire (2a) par le biais d'un membre de tuyau.

3. Appareil de conditionnement d'air selon la revendication 1, dans lequel
la section de commande commande de façon à ce que le ventilateur auxiliaire (2a) et le ventilateur extérieur (2b) tournent à une vitesse identique.

4. Appareil de conditionnement d'air selon la revendication 2, dans lequel
le ventilateur auxiliaire (2a) et le ventilateur extérieur (2b) ont un diamètre essentiellement identique.

5. Appareil de conditionnement d'air selon la revendication 1, dans lequel
le ventilateur auxiliaire (2a) et le ventilateur extérieur (2b) ont des diamètres différents l'un de l'autre ; et
la section de commande commande de telle façon que, du ventilateur auxiliaire (2a) et du ventilateur extérieur (2b), celui qui a un diamètre plus grand tourne à une vitesse inférieure.

6. Appareil de conditionnement d'air selon la revendication 1, dans lequel
la section de commande transmet un signal de commande de vitesse identique au premier moyen d'entraînement à vitesse variable (23) et au deuxième moyen d'entraînement à vitesse variable (22).

7. Appareil de conditionnement d'air selon la revendication 1, dans lequel
un circuit de commande (12) monté avec le moyen d'entraînement à vitesse variable (23) et un circuit de commande (12) monté avec le deuxième moyen d'entraînement à vitesse variable (22) sont formés à partir d'un circuit unique identique ; et
ces circuits de commande (12) sont montés avec les sections réceptrices pour recevoir les signaux de commande de vitesse venant de la section de commande.

8. Appareil de conditionnement d'air selon la revendication 1, comprenant en outre :
en plus de l'unité de ventilateur auxiliaire (1), une unité de ventilateur auxiliaire en aval (1) disposée en aval dans une direction de déchargement d'extraction venant de l'unité de ventilateur auxiliaire (1) pendant le fonctionnement du ventilateur extérieur (2b), dans lequel
l'extraction venant de l'unité extérieure (8) doit être alimentée vers l'unité de ventilateur auxiliaire (1) et ensuite vers l'unité de ventilateur auxiliaire en aval (1) ;
l'unité de ventilateur auxiliaire en aval (1) inclut :
un ventilateur auxiliaire en aval (2a-2, 2a-3) pour libérer l'extraction venant de l'unité de ventilateur auxiliaire (1) vers l'extérieur ; et
un troisième moyen d'entraînement à vitesse variable pour entraîner le ventilateur auxiliaire en aval (2a-2, 2a-3) à des vitesses variables ; et
la section de commande émet une commande de vitesse pour le ventilateur auxiliaire en aval (2a-2, 2a-3) au troisième moyen d'entraînement à vitesse variable pour commander de façon à ce que le ventilateur auxiliaire (2a) et le ventilateur auxiliaire en aval (2a-2, 2a-3) augmentent ou réduisent les vitesses de ceux-ci à un rapport de vitesses identique.

9. Appareil de conditionnement d'air selon la revendication 8, dans lequel
le ventilateur auxiliaire (2a) et le ventilateur auxiliaire en aval (2a-2, 2a-3) ont un diamètre essentiellement identique ; la section de commande commande de façon à ce que le ventilateur auxiliaire (2a) et le ventilateur auxiliaire en aval (2a-2, 2a-3) tournent à une vitesse identique.

10. Appareil de conditionnement d'air selon la revendication 8, dans lequel
l'extraction venant de l'unité extérieure (8) est alimentée vers l'unité de ventilateur auxiliaire (1) et ensuite vers l'unité de ventilateur auxiliaire en amont (1) par le biais d'un membre de tuyau.
